# EUROPEAN PATENT APPLICATION

(11) **EP 4 194 160 A1**
(43) Date of publication of application: **14.06.2023**
(21) Application number: 22207808.1
(22) Date of filing: 16.11.2022
(51) Int. Cl.: B25J 19/00, B25J 19/02

(54) **ROBOT CONFIGURED FOR PERFORMING A SELF-ASSESSMENT OF ITS EXTERNAL SURFACE**

(30) Priority: 07.12.2021 US 202117544456
(71) Applicant: Otis Elevator Company, Farmington CT 06032 (US)
(72) Inventor: MIYAJIMA, Hiromitsu, Chiba, 289-1693 (JP); YAMADA, Atsushi, Chiba, 289-1693 (JP)
(74) Representative: Dehns

(57) **Abstract**

Disclosed is a system (150), including: a robot (160) having a controller (165) configured to perform a self-assessment by being configured to: instruct an external sensor (200) that is spaced apart from the robot to obtain and transmit sensor data that is indicative a condition of an external surface (180) of the robot; determine from the sensor data that the robot requires service; and transmit a service request or schedule service responsive to determining that the robot requires service.

## Description

### BACKGROUND

The disclosure relates to a robot and more specifically a robot configured for performing a self-assessment of its external surface.

Robots may be utilized in the hospitality industry. These robots may be able to perform a self-assessment of its electrical systems from time to time. However, these robots may be unable to determine when their outer surface is unclean or damaged.

### BRIEF SUMMARY

Disclosed is a system, including: a robot having a controller configured to perform a self-assessment by being configured to: instruct an external sensor that is spaced apart from the robot to obtain and transmit sensor data that is indicative a condition of an external surface of the robot; determine from the sensor data that the robot requires service; and transmit a service request or schedule service responsive to determining that the robot requires service.

In addition to one or more of the herein disclosed aspects of the system, or as alternate, the robot is configured to: periodically, or per a predetermined schedule, perform the self-assessment.

In addition to one or more of the herein disclosed aspects of the system, or as alternate, the robot is configured to: identify and enter a predetermined sensor coverage field of the external sensor.

In addition to one or more of the herein disclosed aspects of the system, or as alternate, the robot is configured to: move within the sensor coverage field, whereby the sensor data is indicative of a condition of a plurality of sides of the robot.

In addition to one or more of the herein disclosed aspects of the system, or as alternate, the robot is configured to communicate with the external sensor via a wireless protocol.

In addition to one or more of the herein disclosed aspects of the system, or as alternate, the robot is configured to: determine a location of the external sensor and travel to the external sensor to perform the self-assessment.

In addition to one or more of the herein disclosed aspects of the system, or as alternate, the robot is configured to: determine the location of the external sensor via lookup table, a cloud service or to monitor for a beacon signal emitted from the external sensor.

In addition to one or more of the herein disclosed aspects of the system, or as alternate, the robot is configured to: compare the sensor data with data that is stored on the robot or on a cloud service to determine whether a difference therebetween is greater than a threshold, and thereby determine from the sensor data that the robot requires service.

In addition to one or more of the herein disclosed aspects of the system, or as alternate, the robot is configured to: apply machine learning to the sensor data to determine that the robot requires service.

In addition to one or more of the herein disclosed aspects of the system, or as alternate, the robot is configured to: utilize the sensor data that is at least partially processed on one or more of the external sensor or a cloud service to determine that the robot requires service.

Disclosed is a method of a robot performing a self-assessment, including: instructing an external sensor that is spaced apart from the robot to obtain and transmit sensor data that is indicative a condition of an external surface of the robot; determining from the sensor data that the robot requires service; and transmitting a service request or scheduling service responsive to determining that the robot requires service.

In addition to one or more of the herein disclosed aspects of the method, or as alternate, the method further includes the robot: periodically or on a schedule performing the self-assessment.

In addition to one or more of the herein disclosed aspects of the method, or as alternate, the method further includes the robot: identifying and entering a predetermined sensor coverage field of the external sensor.

In addition to one or more of the herein disclosed aspects of the method, or as alternate, the method further includes the robot: moving within the sensor coverage field, whereby the sensor data is indicative of a condition of a plurality of sides of the robot.

In addition to one or more of the herein disclosed aspects of the method, or as alternate, the method further includes the robot: communicating with the external sensor via a wireless protocol.

In addition to one or more of the herein disclosed aspects of the method, or as alternate, the method further includes the robot: determining a location of the external sensor and traveling to the external sensor to perform the self-assessment.

In addition to one or more of the herein disclosed aspects of the method, or as alternate, the method further includes the robot: determining the location of the external sensor via lookup table, a cloud service or monitoring for a beacon signal emitted from the external sensor.

In addition to one or more of the herein disclosed aspects of the method, or as alternate, the method further includes the robot: comparing the sensor data with data that is stored on the robot or on a cloud service to determine whether a difference therebetween is greater than a threshold, and thereby determine from the sensor data that the robot requires service.

In addition to one or more of the herein disclosed aspects of the method, or as alternate, the method further includes the robot: applying machine learning to the sensor data to determine that the robot requires service.

In addition to one or more of the herein disclosed aspects of the method, or as alternate, the method further includes the robot: utilizing the sensor data that is at least partially processed on one or more of the external sensor or a cloud service to determine that the robot requires service.

### BRIEF DESCRIPTION OF THE DRAWINGS

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2A shows a robot in an elevator, where the robot is configured to perform a self-assessment of its external surface utilizing cameras in the elevator;
FIG. 2B is a top view of the robot in the elevator of FIG. 2A;
FIG. 3 shows a robot in a hallway, where the robot is configured to perform a self-assessment utilizing cameras in a hallway;
FIG. 4 is a flowchart showing a method in which a robot performs a self-assessment of its external surface; and
FIG. 5 is another flowchart showing additional details of a method in which a robot performs a self-assessment of its external surface.

### DETAILED DESCRIPTION

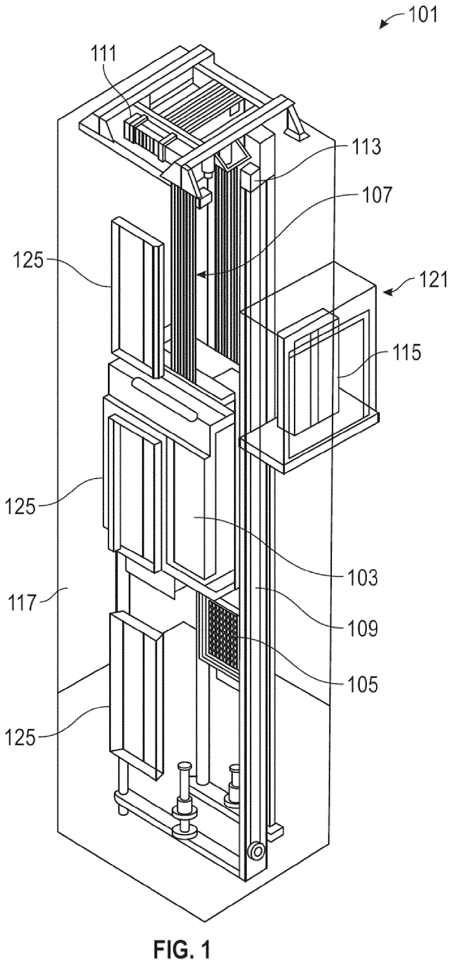

FIG. 1 is a perspective view of an elevator system 101 including an elevator car 103, a counterweight 105, a tension member 107, a guide rail (or rail system) 109, a machine (or machine system) 111, a position reference system 113, and an electronic elevator controller (controller) 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft (or hoistway) 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. Embodiments may also be employed in ropeless elevator systems using self-propelled elevator cars (e.g., elevator cars equipped with friction wheels, pinch wheels or traction wheels). FIG. 1 is merely a non-limiting example presented for illustrative and explanatory purposes.

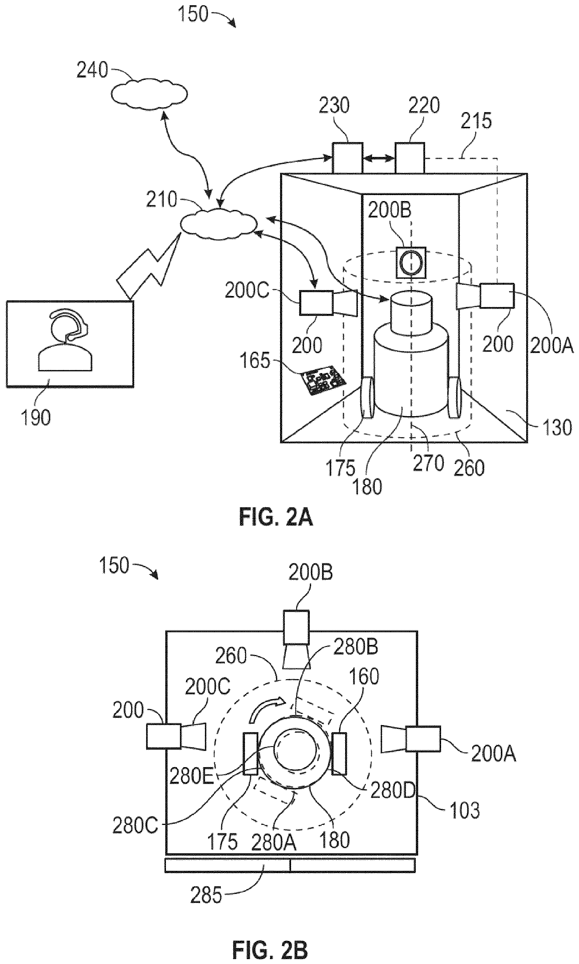

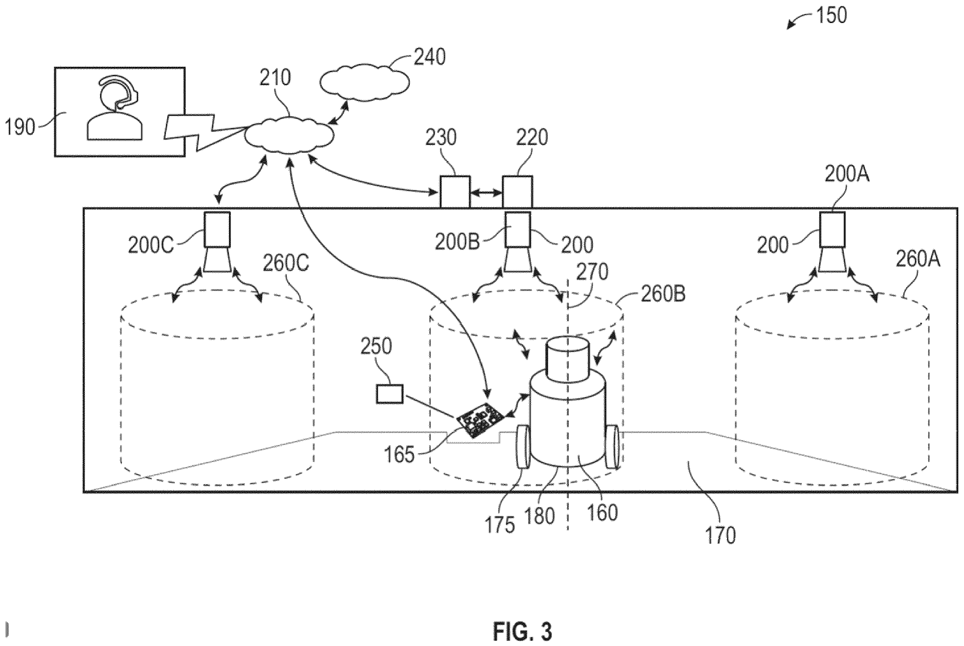

Turning to FIGS. 2A-B and 3, a system 150 is disclosed in which a robot 160 has an internal controller 165 for controlling operations of the robot 160. The robot 160 may be utilized in a hospitality environment, e.g., a building such as a hotel, where the robot 160 may utilize an elevator 103 (FIGS. 2A-B) and travel along a hallway 170 (FIG. 3) to transport items for a hotel guest. Such items could include a tray with food. The robot 160 may be configured to perform a self-assessment of its external surface 180 and determine when it requires maintenance. Such maintenance may be due to an unclean or damaged external surface 180. When the self-assessment is complete, the robot 160 may transmit a service request, responsive to determining that it requires service. The service request may be transmitted to a help or maintenance center 190.

For the robot 160 to perform the self-assessment of its external surface 180, the system 150 may include one or more external sensors (generally referenced as 200) located in the building, for example in the elevator 103 (FIGS. 2A-B) or along the hallway 170 (FIG. 3). In FIGS. 2A-B, there are three external sensors 200A-C, with one on each wall of the elevator 103. The external sensors 200 may be image sensors such as cameras. In addition to assisting the robot 160 with the self-assessment, the external sensors 200 may be utilized for various purposes such as security. Alternatively, the external sensors 200 be dedicated to the purpose of assisting the robot 160 with the self-assessment. To perform the self-assessment, the robot 160 may be configured to wirelessly communicate with the external sensors 200 via a wireless network 210 using one or more of the protocols identified below. The external sensors 200 may be equipped to communicate wirelessly or may be connected via a wired connection 215 (FIG. 2A), identified below, to a control hub 220 that may include a wireless access point 230. In one embodiment, communications between the robot 160 and the external sensors 200 may be via a cloud service 240.

The robot 160 may be configured to instruct the external sensors 200 to obtain and transmit sensor data that is indicative the condition of its external surface 180. In one embodiment, processing of the sensor data may occur at least on part on the external sensors 200 via edge computing, on the cloud service 240, and/or on the robot 160. The processed data may be stitched together to enable the robot 160 to render a determination about its condition.

In one embodiment, the robot 160 may be configured to locate perform the self-assessment periodically or at predetermined scheduled times. When executing the self-assessment, the robot 160 may be configured to locate the external sensors 200 utilizing, e.g., a lookup table 250, via the cloud service 240, or otherwise, and by comparing a current location of the robot 160 to a location of the external sensors 200. As another example, the robot 160 may be configured to monitor for beacon signals emitted from the external sensors 200. The robot 160 may then be configured to travel to a nearest one of the external sensors 200, which may be in the elevator 130 (FIGS. 2A-B), along a hallway 170 (FIG. 3), or in another sensor equipped location, to perform the self-assessment by communicating with nearest one of the external sensors 200 to obtain the sensor data.

In one embodiment, to perform the self-assessment the robot 160 may be configured to identify and enter a predetermined sensor coverage field or zone 260 of the external sensors 200. All external sensors 200 may share a common sensor coverage field 260 in an elevator 103 (FIG. 2A). In a hallway 170 (FIG. 3) each of the external sensors 200A-C may have an associated sensor coverage field 260A-C. The size and shape of the sensor coverage field 260 can be obtained from information stored on a lookup table 250, from a cloud service, or from the external sensors 200, for example. In one embodiment, the robot 160 may be configured to spin around its vertical axis 270 within the sensor coverage field 260, or otherwise move within the sensor coverage field 260 while the external sensors 200 are collecting sensor data. Spinning motion may be accomplished via wheels 275. By doing this, the sensor data would be indicative of a condition of a plurality of sides (referenced generally as 280) of the robot 160 (FIG. 2B, with doors 285 shown for reference), e.g., forward side 280A, back side 280B, left side 280C, right side 280D and top side 280E of the robot 160. The sides of the robot 160 are shown as being sections a cylinder because the robot 160 is shown as being can shaped. However, this is not intended on limiting the scope of the embodiments. It is to be appreciated that, due to the spinning motion of the robot170, one of the external sensors 200 can be utilized to accomplish the self-assessment.

In one embodiment, when performing the self-assessment, the robot 160 is configured to compare the sensor data with stored data representing an optimal condition of the robot 160 to determine whether a difference therebetween is greater than a threshold. From this comparison, the robot 160 may be configured to determine from the sensor data that the robot 160 requires maintenance service. In one embodiment, the robot 160 may be configured to apply machine learning to the sensor data to determine that it requires service. Using machine learning, the robot 160 may be configured to distinguish between an unclean surface and a clean surface, a damaged surface and an undamaged surface, and to identify acceptable surface markings or shapes. For example, using machine learning the robot 160 may be configured to learn to identify an image of a food tray, which does not represent an unclean or damaged surface, and does not require a maintenance call. On the other hand, the robot 160 may be configured to learn to identity a scratch or dent on its external surface 180, which would require a maintenance call. Similarly, the robot 160 may be configured to identify intentionally applied indicia on its external surface 180, such as a logo or product advertisement, which would also not require a maintenance call.

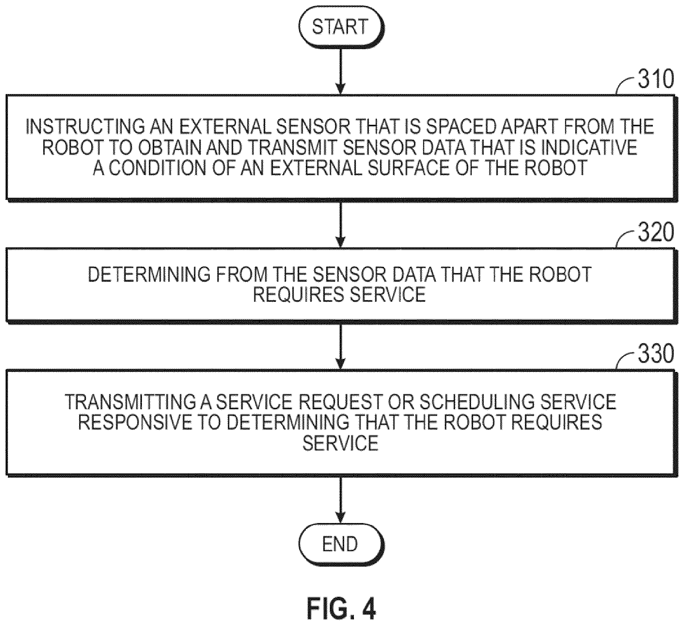

Turning to FIG. 4, a flowchart shows a method of the robot performing a self-assessment. As shown in block 310, the method may include the robot 160 instructing external sensors 200 that are spaced apart from the robot 160 to obtain and transmit sensor data that is indicative a condition of the external surface 180 of the robot 160. As shown in block 320, the method may include the robot 160 determining from the sensor data that the robot 160 requires service. As shown in block 330, the method may include the robot 160 transmitting a service request or scheduling service responsive to determining that the robot 160 requires service.

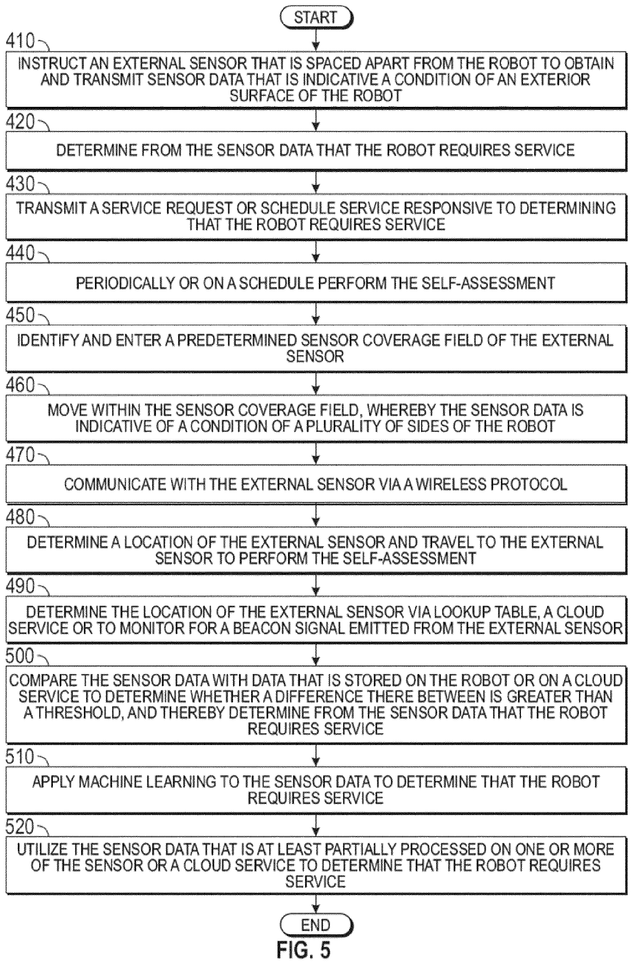

Turning to FIG5. 5 another flowchart shows additional details regarding the method of the robot performing a self-assessment. As shown in block 410, the method may include the robot 160 instructing external sensors 200 that are spaced apart from the robot 160 to obtain and transmit sensor data that is indicative a condition of the external surface 180 of the robot 160. As shown in block 420, the method may include the robot 160 determining from the sensor data that the robot 160 requires service. As shown in block 430, the method may include the robot 160 transmitting a service request or scheduling service responsive to determining that the robot 160 requires service. As can be appreciated, blocks 410-440 are otherwise disclosed in FIG. 4. Additionally, as shown in block 440, the method may include the robot 160 periodically or on a schedule performing the self-assessment. As shown in block 450 the method may include the robot 160 identifying and entering a predetermined sensor coverage field 260 of the external sensors 200. As shown in block 460 the method may include the robot moving within the sensor coverage field 260. From this, the sensor data may be indicative of a condition of a plurality of sides 280 of the robot 160.

As shown in block 470, the method may include the robot 160 communicating with the external sensors 200 via a wireless protocol. As shown in block 480, the method includes the robot 160 determining a location of the external sensors 200 and traveling to the external sensors 200 to perform the self-assessment. As shown in block 490, the method may include the robot 160 determining the location of the external sensors 200 via lookup table 250, a cloud service 240 or monitoring for a beacon signal emitted from the external sensors 200. As shown in block 500, the method may include the robot 160 comparing the sensor data with data that is stored on the robot 160 or on the cloud service 240 to determine whether a difference therebetween is greater than a threshold. From this, the robot 160 may determine from the sensor data that the robot 160 requires service. As shown in block 510, the method may include the robot applying machine learning to the sensor data to determine that the robot 160 requires service. As shown in block 520, the method may include the robot 160 utilizing the sensor data that is at least partially processed on one or more of the external sensors 200 or the cloud service 240 to determine that the robot 160 requires service.

With the above embodiments, a robot 160 is configured to self-assess when its external surface is unclean or damaged and schedule a service call as needed. Thus in a hospitality environment, the robot 160 is capable of maintaining an optimal appearance.

Sensor data identified herein may be obtained and processed separately, or simultaneously and stitched together, or a combination thereof, and may be processed in a raw or complied form. The sensor data may be processed on the sensor (e.g. via edge computing), by controllers identified or implicated herein, on a cloud service, or by a combination of one or more of these computing systems. The senor may communicate the data via wired or wireless transmission lines, applying one or more protocols as indicated below.

Wireless connections may apply protocols that include local area network (LAN, or WLAN for wireless LAN) protocols. LAN protocols include WiFi technology, based on the Section 802.11 standards from the Institute of Electrical and Electronics Engineers (IEEE). Other applicable protocols include Low Power WAN (LPWAN), which is a wireless wide area network (WAN) designed to allow long-range communications at a low bit rates, to enable end devices to operate for extended periods of time (years) using battery power. Long Range WAN (LoRaWAN) is one type of LPWAN maintained by the LoRa Alliance, and is a media access control (MAC) layer protocol for transferring management and application messages between a network server and application server, respectively. LAN and WAN protocols may be generally considered TCP/IP protocols (transmission control protocol/Internet protocol), used to govern the connection of computer systems to the Internet. Wireless connections may also apply protocols that include private area network (PAN) protocols. PAN protocols include, for example, Bluetooth Low Energy (BTLE), which is a wireless technology standard designed and marketed by the Bluetooth Special Interest Group (SIG) for exchanging data over short distances using short-wavelength radio waves. PAN protocols also include Zigbee, a technology based on Section 802.15.4 protocols from the IEEE, representing a suite of high-level communication protocols used to create personal area networks with small, low-power digital radios for low-power low-bandwidth needs. Such protocols also include Z-Wave, which is a wireless communications protocol supported by the Z-Wave Alliance that uses a mesh network, applying low-energy radio waves to communicate between devices such as appliances, allowing for wireless control of the same.

Wireless connections may also include radio-frequency identification (RFID) technology, used for communicating with an integrated chip (IC), e.g., on an RFID smartcard. In addition, Sub-lGhz RF equipment operates in the ISM (industrial, scientific and medical) spectrum bands below Sub 1Ghz - typically in the 769 - 935 MHz, 315 Mhz and the 468 Mhz frequency range. This spectrum band below 1Ghz is particularly useful for RF IOT (internet of things) applications. The Internet of things (IoT) describes the network of physical objects-"things"-that are embedded with sensors, software, and other technologies for the purpose of connecting and exchanging data with other devices and systems over the Internet. Other LPWAN-IOT technologies include narrowband internet of things (NB-IOT) and Category M1 internet of things (Cat M1-IOT). Wireless communications for the disclosed systems may include cellular, e.g. 2G/3G/4G (etc.). Other wireless platforms based on RFID technologies include Near-Field-Communication (NFC), which is a set of communication protocols for low-speed communications, e.g., to exchange date between electronic devices over a short distance. NFC standards are defined by the ISO/IEC (defined below), the NFC Forum and the GSMA (Global System for Mobile Communications) group. The above is not intended on limiting the scope of applicable wireless technologies.

Wired connections may include connections (cables/interfaces) under RS (recommended standard)-422, also known as the TIA/EIA-422, which is a technical standard supported by the Telecommunications Industry Association (TIA) and which originated by the Electronic Industries Alliance (EIA) that specifies electrical characteristics of a digital signaling circuit. Wired connections may also include (cables/interfaces) under the RS-232 standard for serial communication transmission of data, which formally defines signals connecting between a DTE (data terminal equipment) such as a computer terminal, and a DCE (data circuit-terminating equipment or data communication equipment), such as a modem. Wired connections may also include connections (cables/interfaces) under the Modbus serial communications protocol, managed by the Modbus Organization. Modbus is a master/slave protocol designed for use with its programmable logic controllers (PLCs) and which is a commonly available means of connecting industrial electronic devices. Wireless connections may also include connectors (cables/interfaces) under the PROFibus (Process Field Bus) standard managed by PROFIBUS & PROFINET International (PI). PROFibus which is a standard for fieldbus communication in automation technology, openly published as part of IEC (International Electrotechnical Commission) 61158. Wired communications may also be over a Controller Area Network (CAN) bus. A CAN is a vehicle bus standard that allow microcontrollers and devices to communicate with each other in applications without a host computer. CAN is a message-based protocol released by the International Organization for Standards (ISO). The above is not intended on limiting the scope of applicable wired technologies.

When data is transmitted over a network between end processors as identified herein, the data may be transmitted in raw form or may be processed in whole or part at any one of the end processors or an intermediate processor, e.g., at a cloud service (e.g. where at least a portion of the transmission path is wireless) or other processor. The data may be parsed at any one of the processors, partially or completely processed or complied, and may then be stitched together or maintained as separate packets of information. Each processor or controller identified herein may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory identified herein may be but is not limited to a random access memory (RAM), read only memory (ROM), or other electronic, optical, magnetic or any other computer readable medium.

The controller may further include, in addition to a processor and nonvolatile memory, one or more input and/or output (I/O) device interface(s) that are communicatively coupled via an onboard (local) interface to communicate among other devices. The onboard interface may include, for example but not limited to, an onboard system bus, including a control bus (for inter-device communications), an address bus (for physical addressing) and a data bus (for transferring data). That is, the system bus may enable the electronic communications between the processor, memory and I/O connections. The I/O connections may also include wired connections and/or wireless connections identified herein. The onboard interface may have additional elements, which are omitted for simplicity, such as controllers, buffers (caches), drivers, repeaters, and receivers to enable electronic communications. The memory may execute programs, access data, or lookup charts, or a combination of each, in furtherance of its processing, all of which may be stored in advance or received during execution of its processes by other computing devices, e.g., via a cloud service or other network connection identified herein with other processors.

Embodiments can be in the form of processor-implemented processes and devices for practicing those processes, such as processor. Embodiments can also be in the form of computer code based modules, e.g., computer program code (e.g., computer program product) containing instructions embodied in tangible media (e.g., non-transitory computer readable medium), such as floppy diskettes, CD ROMs, hard drives, on processor registers as firmware, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes a device for practicing the exemplary embodiments. When implemented on a general-purpose microprocessor, the computer program code segments configure the microprocessor to create specific logic circuits.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A system (150), comprising:
a robot (160) having a controller (165) configured to perform a self-assessment by being configured to:
instruct an external sensor (200) that is spaced apart from the robot (160) to obtain and transmit sensor data that is indicative a condition of an external surface (180) of the robot;
determine from the sensor data that the robot (160) requires service; and
transmit a service request or schedule service responsive to determining that the robot (160) requires service.

2. The system (150) of claim 1, wherein the robot (160) is configured to:
periodically, or per a predetermined schedule, perform the self-assessment.

3. The system (150) of claim 1 or 2, wherein the robot (160) is configured to:
identify and enter a predetermined sensor coverage field of the external sensor (200); and, optionally, to:
move within the sensor coverage field, whereby the sensor data is indicative of a condition of a plurality of sides (280) of the robot (160).

4. The system (150) of any preceding claim, wherein the robot (160) is configured to communicate with the external sensor (200) via a wireless protocol.

5. The system (150) of any preceding claim, wherein the robot (160) is configured to:
determine a location of the external sensor (200) and travel to the external sensor (200) to perform the self-assessment; and, optionally, to:
determine the location of the external sensor (200) via lookup table (250), a cloud service (240) or to monitor for a beacon signal emitted from the external sensor.

6. The system (150) of any preceding claim, wherein the robot (160) is configured to:
compare the sensor data with data that is stored on the robot (160) or on a cloud service (240) to determine whether a difference therebetween is greater than a threshold, and thereby determine from the sensor data that the robot (160) requires service.

7. The system (150) of any preceding claim, wherein the robot (160) is configured to:
apply machine learning to the sensor data to determine that the robot (160) requires service.

8. The system (150) of any preceding claim, wherein the robot (160) is configured to:
utilize the sensor data that is at least partially processed on one or more of the external sensor (200) or a cloud service (240) to determine that the robot (160) requires service.

9. A method of a robot (160) performing a self-assessment, comprising:
instructing an external sensor (200) that is spaced apart from the robot (160) to obtain and transmit sensor data that is indicative a condition of an external surface (180) of the robot (160);
determining from the sensor data that the robot (160) requires service; and
transmitting a service request or scheduling service responsive to determining that the robot (160) requires service.

10. The method of claim 9, further comprising the robot (160):
periodically or on a schedule performing the self-assessment.

11. The method of claim 9 or 10, further comprising the robot (160):
identifying and entering a predetermined sensor coverage field of the external sensor (200); and, optionally:
moving within the sensor coverage field, whereby the sensor data is indicative of a condition of a plurality of sides (280) of the robot (160).

12. The method of any of claims 9-11, further comprising the robot (160):
communicating with the external sensor (200) via a wireless protocol.

13. The method of any of claims 9-12, further comprising the robot (160):
determining a location of the external sensor (200) and traveling to the external sensor (200) to perform the self-assessment; and, optionally:
determining the location of the external sensor (200) via lookup table (250), a cloud service (240) or monitoring for a beacon signal emitted from the external sensor (200).

14. The method of any of claims 9-13, further comprising the robot (160):
comparing the sensor data with data that is stored on the robot (160) or on a cloud service (240) to determine whether a difference therebetween is greater than a threshold, and thereby determine from the sensor data that the robot (160) requires service.

15. The method of any of claims 9-14, further comprising the robot (160):
applying machine learning to the sensor data to determine that the robot (160) requires service; and/or
utilizing the sensor data that is at least partially processed on one or more of the external sensor (200) or a cloud service to determine that the robot (160) requires service.
